Europäisches Patentamt

European Patent Office

Office européen des brevets

(11) Numéro de publication : **0 504 004 A1**

# (12) DEMANDE DE BREVET EUROPEEN

(21) Numéro de dépôt : **92400550.7**

(22) Date de dépôt : **03.03.92**

(51) Int. Cl.⁵ : **F16D 3/20**

(30) Priorité : **08.03.91 FR 9102853**

(43) Date de publication de la demande :
**16.09.92 Bulletin 92/38**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Moulinet, François**
**39 rue des Temporets**
**F-78510 Triel sur Seine (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Joint de transmission du type à fixité axiale.**

(57) L'invention propose un joint de transmission (10) à fixité axiale du type comportant un corps (14) solidaire d'un premier arbre et qui délimite une cavité (16) à l'intérieur de laquelle est formée au moins une paire de chemins de roulement entre lesquels est reçu un élément d'articulation (22) du joint relié à un second arbre (12) dont l'extrémité libre (24) reçue dans la cavité (16) coopère avec un fond (28, 32) de la cavité (16) pour s'opposer à tout déplacement axial relatif du second arbre (12) par rapport au corps (14) dans le sens correspondant, et du type comportant un soufflet d'étanchéité (34) dont une première extrémité (36) est fixée sur le corps de joint (14) au voisinage du bord libre (26) de la cavité (16) et dont la seconde extrémité (42) est fixée au second arbre (12), caractérisé en ce que le soufflet (34) exerce sur le second arbre (12) un effort (F) selon une direction sensiblement parallèle à l'axe (X-X) du corps de joint (14) et en direction du fond (28, 32) de la cavité (16) de manière à maintenir ladite extrémité libre (24) du second arbre (12) en appui sous charge contre le fond de la cavité.

FIG.1

EP 0 504 004 A1

La présente invention concerne un joint de transmission du type à fixité axiale.

L'invention concerne plus particulièrement un joint de transmission à fixité axiale du type comportant un corps solidaire d'un premier arbre et qui délimite une cavité à l'intérieur de laquelle est formée au moins une paire de chemins de roulement entre lesquels est reçu un élément d'articulation du joint relié à un second arbre dont l'extrémité libre reçue dans la cavité coopère avec un fond de la cavité pour s'opposer à tout déplacement axial relatif du second arbre par rapport au corps dans le sens correspondant, et du type comportant un soufflet d'étanchéité dont une première extrémité est fixée au voisinage du bord libre de la cavité et dont la seconde extrémité est fixée au second arbre.

On connaît de nombreux modes de réalisation d'un joint de transmission de ce type à fixité axiale dans lesquels les moyens pour immobiliser axialement le premier arbre par rapport au second arbre dans le sens correspondant à leur éloignement relatif sont de structure complexe, coûteuse à réaliser et nécessitant parfois des opérations compliquées pour l'assemblage du joint de transmission.

Afin de remédier à ces inconvénients, la présente invention propose un joint de transmission du type mentionné ci-dessus, caractérisé en ce que le soufflet d'étanchéité exerce sur le second arbre un effort selon une direction sensiblement parallèle à l'axe du premier arbre et en direction du fond de la cavité de manière à maintenir l'extrémité du second arbre en appui sous charge contre le fond de la cavité.

Selon d'autres caractéristiques de l'invention :
– le soufflet constitue un support élastique du second arbre par rapport au corps de joint pour conférer au soufflet une fonction d'amortissement des sollicitations axiales entre ces deux organes ;
– le soufflet est réalisé en un matériau déformable élastiquement et présente, en section par un plan axial, un profil sensiblement en forme de M dont les extrémités libres des branches verticales sont fixées au bord libre de la cavité de manière à former un pli principal du soufflet orienté sensiblement selon l'axe général du joint de transmission ;
– le joint de transmission comporte des moyens de réglage de la valeur de l'effort exercé par le soufflet et/ou de l'effet d'amortissement axial qu'il procure ;
– les moyens de réglage sont des moyens de réglage de la position axiale de la première extrémité du soufflet d'étanchéité par rapport au corps du joint ;
– la première extrémité du soufflet est une portion cylindrique montée de manière étanche sur une portion cylindrique en vis-à-vis du corps du joint et il est prévu une série de crans formés sur l'une et/ou l'autre des deux portions cylindriques et qui déterminent la position axiale de réglage ;
– le joint comporte des moyens de serrage radial de la première extrémité du soufflet en position réglée sur le corps de joint.

D'autres caractéristiques et avantages de l'invention apparaîtront à la lecture de la description détaillée qui va suivre pour la compréhension de laquelle on se reportera aux dessins annexés dans lesquels :
– La figure 1 est une vue en coupe axiale d'un premier mode de réalisation d'un joint de transmission réalisé conformément aux enseignements de l'invention ;
– la figure 2 est une demi-vue en coupe axiale représentant un deuxième mode de réalisation de l'invention ;
– la figure 3 est une demi-vue en coupe axiale représentant un troisième mode de réalisation ; et
– la figure 4 est une vue à échelle agrandie du détail A du mode de réalisation de la figure 3.

On a représenté sur les figures un joint de transmission 10 permettant de relier un premier arbre de transmission (non représenté) à un second arbre de transmission 12 d'axe Y-Y.

Le premier arbre ou un organe d'une transmission de véhicule automobile est relié à un corps de joint de transmission 14 d'axe X-X.

Le joint est représenté sur les figures en position alignée dans laquelle les axes X-X et Y-Y sont confondus.

Le corps de joint de transmission 14 est une tulipe ou barillet qui délimite une cavité principale 16 prévue pour recevoir l'extrémité du second arbre 12 sur laquelle est fixé, dans le mode de réalisation représenté aux figures, un tripode 18.

Chaque bras 20 du tripode 18 reçoit un galet d'articulation 22 qui est lui-même reçu entre des paires de chemins de roulement formées dans le corps de joint 14.

Le tripode 20 et l'extrémité libre 24 du second arbre 12 sont introduits par l'extrémité ouverte de la cavité délimitée par le bord libre d'extrémité 26 du corps de joint 14.

La cavité 16 est fermée à l'une de ses extrémités, à droite en considérant les figures, par un fond 28 qui s'étend dans un plan radial perpendiculaire à l'axe X-X.

L'extrémité libre 24 de l'arbre 12 présente un profil en forme de calotte sphérique qui coopère avec une surface concave complémentaire 30 formée dans une pièce d'appui 32 rapportée sur le fond 28 du corps de joint 14. De ce fait, l'arbre 12 ne peut pas se déplacer axialement par rapport au corps de joint 14 de la gauche vers la droite en considérant les figures.

Afin d'assurer la fixité axiale du joint de transmission 10, c'est-à-dire de s'opposer également à tout déplacement axial de l'arbre 12 par rapport au corps de joint 14 dans l'autre sens, c'est-à-dire vers la gauche en considérant les figures, le joint de transmission 10 comporte un soufflet d'étanchéité 34 de conception particulière.

Le soufflet 34 est une pièce en matériau déformable élastiquement présentant une forme de révolution.

La première extrémité 36 du soufflet 34 est fixée au voisinage du bord libre 26 du corps de joint 14 de manière à être immobilisée axialement par rapport à ce dernier.

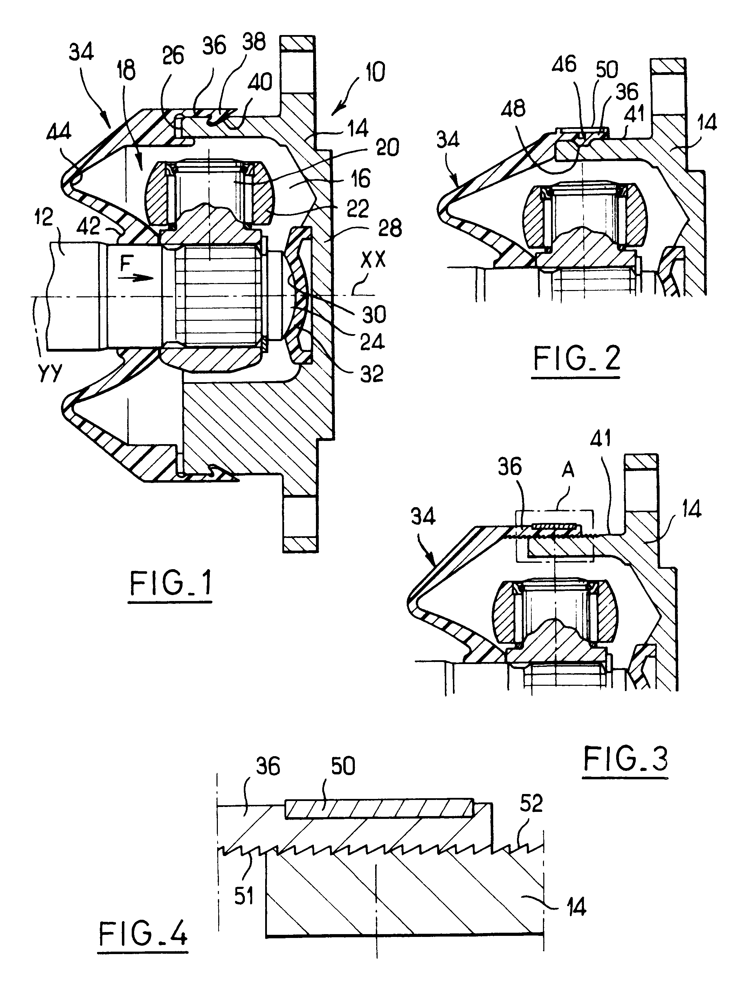

Dans le mode de réalisation représenté à la figure 1, la fixation de la première extrémité 36 est assurée à l'aide d'une portion en forme de crochet 38 de la première extrémité 36 reçue dans une gorge de profil complémentaire 40 formée dans la surface périphérique externe 41 du corps de joint 14.

D'une manière connue, la seconde extrémité 42 du soufflet d'étanchéité 34 est fixée sur la surface périphérique externe de l'arbre 12, par exemple par collage ou adhérisation.

Conformément aux enseignements de l'invention, le soufflet d'étanchéité 34 est conçu de manière à exercer en permanence sur l'arbre 12 un effort axial F qui sollicite l'extrémité libre 24 de l'arbre 12 en appui sous charge contre la pièce d'appui 32 rapportée sur le fond 30 du corps de joint 14.

Le soufflet 34 exerce ainsi en permanence une précharge élastique sur l'arbre 12 selon une direction sensiblement parallèle à l'axe X-X de manière à s'opposer à tout déplacement axial relatif de l'arbre 12 par rapport au corps de joint 14 vers la gauche en considérant les figures.

La valeur de l'effort F appliquée par le soufflet 34 dépend de la conception de ce dernier, et notamment du choix du matériau qui le constitue, et de son profil.

La conception du soufflet a également pour effet de lui conférer une fonction d'amortissement qui s'ajoute à l'effet de précharge élastique.

De même la conception procure un effet de rigidités axiales différenciées selon la direction de sollicitation de l'arbre 12 par rapport au corps de joint 14.

Dans le mode de réalisation représenté à la figure 1, le soufflet d'étanchéité 34 présente en section axiale sensiblement la forme d'un M qui est en position couchée en considérant les figures.

Les extrémités libres des branches verticales du M constituent la première extrémité 36 du soufflet d'étanchéité 34.

La portion centrale en forme de V du soufflet d'étanchéité est traversée par l'arbre 12 et constitue la seconde extrémité 42 du soufflet adhérisée sur cet arbre.

Ce profil en M forme ainsi un pli principal 44 qui est orienté sensiblement selon l'axe général du joint.

Cette conception du pli principal 44 permet de conférer au soufflet d'étanchéité sa souplesse nécessaire pour permettre une mise sous angle du joint de transmission 10, d'opposer une réaction axiale importante à tout effort de traction axial appliqué à l'arbre 12 tendant à éloigner l'extrémité libre 24 du fond de la cavité du corps de joint 14, et d'obtenir l'effet d'amortissement recherché.

L'épaisseur du soufflet 34 varie, comme on peut le voir sur la figure 1, le long de son profil et est adaptée de manière à délimiter des portions de raideur suffisante au voisinage de ses extrémités de fixation et des portions de souplesse suffisante dans la zone du pli.

Dans la variante de réalisation représentée à la figure 2, la première extrémité 36 est également une portion de forme générale cylindrique reçue sur une portion cylindrique correspondante de la surface périphérique extérieure 41 du corps de joint 14.

La surface intérieure de la première extrémité 36 comporte une nervure radiale 46 qui est reçue dans une gorge correspondante 48 formée dans la surface 41 de manière à immobiliser axialement la première extrémité 36 par rapport au corps de joint 14.

La première extrémité 36 est maintenue serrée radialement autour du corps de joint 14 par un anneau de serrage 50.

Dans la variante de réalisation représentée aux figures 3 et 4, il est prévu des moyens de réglage de la valeur de l'effort F.

Ces moyens de réglage sont constitués par des moyens de réglage de la position axiale de la première extrémité 36 du soufflet 34 par rapport au corps de joint 14.

A cet effet, la surface cylindrique interne de la portion d'extrémité 36 du soufflet 34 comporte une série de crans axiaux 51 et la portion cylindrique en vis-à-vis de la surface périphérique extérieure 41 du corps de joint 14 comporte des crans complémentaires 52.

On comprend donc que l'engagement réciproque d'un plus ou moins grand nombre de crans 51 et 52 détermine une position axiale précise de la première extrémité 36 par rapport au corps de joint 14.

La portion d'extrémité 36 du soufflet 34 est maintenue serrée radialement sur le corps de joint 14 par un anneau de serrage radial 50.

Selon la position axiale relative de la première extrémité 36 du soufflet par rapport au corps de joint 14, la valeur de l'effort de précharge F est plus ou moins grande et la loi d'amortissement est modifiée.

L'invention n'est pas limitée aux modes de réalisation qui viennent d'être décrits.

Elle n'est pas notamment limitée aux joints de transmission du type homocinétique à tripode et à galets.

Elle n'est pas non plus limitée à la forme et au profil du soufflet 34 qui est illustré sur les figures.

**Revendications**

1. Joint de transmission (10) à fixité axiale du type comportant un corps (14) solidaire d'un premier arbre et qui délimite une cavité (16) à l'intérieur de laquelle est formée au moins une paire de chemins de roulement entre lesquels est reçu un élément d'articulation (22) du joint relié à un second arbre (12) dont l'extrémité libre (24) reçue dans la cavité (16) coopère avec un fond (28, 32) de la cavité (16) pour s'opposer à tout déplacement axial relatif du second arbre (12) par rapport au corps (14) dans le sens correspondant, et du type comportant un soufflet d'étanchéité (34) dont une première extrémité (36) est fixée sur le corps de joint (14) au voisinage du bord libre (26) de la cavité (16) et dont la seconde extrémité (42) est fixée au second arbre (12), caractérisé en ce que le soufflet (34) exerce sur le second arbre (12) un effort (F) selon une direction sensiblement parallèle à l'axe (X-X) du corps de joint (14) et en direction du fond (28, 32) de la cavité (16) de manière à maintenir ladite extrémité (24) du second arbre (12) en appui sous charge contre le fond de la cavité.

2. Joint de transmission selon la revendication 1, caractérisé en ce que le soufflet constitue un support élastique du second arbre (12) par rapport au corps de joint pour conférer au soufflet une fonction d'amortissement des sollicitations axiales entre ces deux organes.

3. Joint de transmission selon l'une des revendications 1 ou 2, caractérisé en ce que le soufflet est réalisé en un matériau déformable élastiquement et présente, en section par un plan axial, un profil sensiblement en forme de M dont les extrémités libres des branches verticales sont fixées au bord libre (26) de la cavité (16) de manière à former un pli principal (44) orienté sensiblement selon l'axe général du joint de transmission.

4. Joint de transmission selon la revendication 2, caractérisé en ce qu'il comporte des moyens (51, 52) de réglage de la valeur de l'effort (F) exercé par le soufflet (34) et/ou de l'effet d'amortissement qu'il procure.

5. Joint de transmission selon la revendication 4, caractérisé en ce que les moyens de réglage sont des moyens de réglage de la position axiale de la première extrémité (36) du soufflet d'étanchéité par rapport au corps de joint (14).

6. Joint de transmission selon la revendication 5, caractérisé en ce que la première extrémité du soufflet est une portion cylindrique (36) montée de manière étanche sur une portion cylindrique en vis-à-vis du corps du joint (14) et en ce qu'il est prévu une série de crans (51, 52) formés sur l'une et/ou l'autre des deux portions cylindriques et qui déterminent ladite position axiale de réglage.

7. Joint de transmission selon la revendication 6, caractérisé en ce qu'il comporte des moyens de serrage radial de la première extrémité (36) du soufflet en position réglée.

FIG.1

FIG.2

FIG.3

FIG.4

Office européen
des brevets

**RAPPORT DE RECHERCHE EUROPEENNE**

Numero de la demande

EP     92 40 0550

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | FR-A-2 655 102 (GLAENZER SPICER) 31 Mai 1991<br>* le document en entier *<br>--- | 1,2 | F16D3/20 |
| A | DE-A-2 927 648 (SCHMID)<br>* le document en entier *<br>--- | 1 | |
| A | GB-A-2 186 037 (LÖHR & BROMKAMP)<br>* le document en entier *<br><br>----- | 3 | |

**DOMAINES TECHNIQUES RECHERCHES (Int. Cl.5)**

F16D
F16D

Le présent rapport a été établi pour toutes les revendications

| Lieu de la recherche | Date d'achèvement de la recherche | Examinateur |
|---|---|---|
| LA HAYE | 04 MAI 1992 | BALDWIN D. R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

6